# EUROPEAN PATENT SPECIFICATION

(11) **EP 0 357 112 B1**
(45) Date of publication and mention of the grant of the patent: **22.09.1993**
(21) Application number: 89201978.7
(22) Date of filing: 27.07.1989
(51) Int. Cl.: C08G 69/14, C08G 69/40, C08G 69/44, C08G 69/00, C08L 71/12, C08L 25/06

(54) **Conversion products of lactam-blocked diisocyanates and polylactam block copolymers derived therefrom**
Umsetzungsprodukte von lactamgeblockten Diisocyanaten und daraus hergestellte Lactamblockcopolymere
Produits de conversion de diisocyanates bloqués par un lactame et copolylactames en dérivant

(30) Priority: 30.07.1988 NL 8801914
(43) Date of publication of application: 07.03.1990
(73) Proprietor: DSM N.V., 6411 TE Heerlen (NL)
(72) Inventor: Koning, Cornelis Eme, NL-6436 EL Schinnen (NL); van Geenen, Albert Arnold, NL-6441 KM Brunssum (NL); Roerdink, Eize, NL-6165 CW Geleen (NL); Fayt, Roger Michel Andre, B-4121 Neuville (BE); Teyssie, Philippe, B-4121 Neuville (BE)

(56) References cited:
- EP-A- 0 134 616
- EP-A- 0 135 233
- EP-A- 0 188 029
- EP-A- 0 189 613

## Description

The invention relates to conversion products of lactam-blocked diisocyanates, to polylactam block copolymers derived therefrom by lactam polymerization on a lactam group and to the use of such block copolymers as compatibilizers for polyamide mixtures. Conversion products of lactam-blocked diisocyanates are known from EP-A-134.616. Such products can be obtained, for instance, according to processes described in EP-A-135.233 by converting lactam-blocked diisocyanates with polyols, preferably polyether polyols, polyester polyols and polybutadiene polyols. EP-A-134.616 contains a description to the effect that the conversion products mentioned therein are highly suited as activators or accelerators in the preparation of nylon block copolymers, particularly in the so-called RIM or RRIM systems, which require a rapid polymerization process. Such nylon block copolymers contain blocks of a polyamide.

Polyamides are widely known polycondensates of mostly aliphatic dicarboxylic acids with 4-12 carbon atoms with mostly aliphatic diamines with 4-14 carbon atoms and/or of lactams with 6-12 carbon atoms. Examples of polyamides are: polyhexamethylene adipamide (nylon 6,6), polyhexamethylene azelamide (nylon 6,9), polyhexamethylene sebacamide (nylon 6,10), polyhexamethylene lauramide (nylon 6,12), polytetramethylene adipamide (nylon 4,6), polycaprolactam (nylon 6) and polylaurinolactam (nylon 12). The dicarboxylic acids and/or the diamines may also be aromatic.

Polyamides may be built up also of two or more dicarboxylic acids and/or two or more diamines, or of two or more lactams and they may also consist of mixtures of two or more polyamides.

The uses of polyamides are very numerous. For certain of these uses it is often desirable for the properties of polyamides to be modified. Modification of properties is often achieved by synthesizing block copolymers consisting of one or more poplyamide blocks and one or more blocks of a different kind of polymer. Thus hydrophobic blocks in, for instance, polycaprolactam are known, for instance, to be capable of abating the sometimes undesired hydrophilic nature thereof. Thus polylactam-polyether block copolymers, for instance, have a combination of properties that make them well suited for so-called engineering plastics.

On the other side, polyamides or copolyamides have been mixed with other polymeric compounds for a diversity of uses. An example of it known in the art is polyamide-ABS. Often the components in such mixtures are not compatible, whereas it is necessary for improving the properties or for obtaining the desired properties that the relevant components should be compatible.

In this connection compatibility is understood to mean that a (co)polyamide can either be homogeneously mixed with another polymeric compound or that the polymers can be mixed with each other in a very fine distribution, forming a stable mixture. In the process a dispersion of one polymer (discontinuous phase) in a matrix of the other polymer (continuous phase) is usually formed.

When a (co)polyamide is intimately mixed with a polymer not compatible with it at such high temperatures that the polymers are melted, for instance in an extruder, it is indeed possible to obtain a fine distribution, but the mixture is not stable.
During further processing, for instance by injection-moulding, it manifests itself in an undesired manner in that the fine distribution is lost again - coagulation of the dispersed phase occurs - in consequence of which the properties of the mixture deteriorate, at least become less good.

Now, by incorporating so-called compatibilizers in the intended non-compatible compositions the dispersability of the components of these compositions and the stability of the dispersions can be improved.

Generally, compatibilizers reduce the surface tension between the phases formed by the components, so that a finer dispersion can be obtained. Such fine dispersion is also stabilized by the compatibilizers. The compatibilizers are present substantially in the boundary surface between the phases and thus contribute to an improved adhesion between the phases. The mechanical and physical properties are improved by it, while the resulting stabilization of the dispersion is of major importance for the next processing steps, for instance injection-moulding.

The desired compatibility is generally obtained with minor amounts of compatibilizers of less than 15% (wt) and mostly less than 10% (wt).

It is highly desirable to have good compatibilizers for mixtures of (co)polyamides with other polymers.

Now, compounds have been found having the general formula: 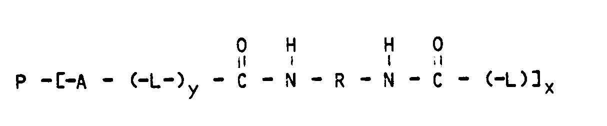
where
- A: represents an oxygen atom or an -NH group,
- R: represents an alkyl, aralkyl, alkaryl or aryl group, where alkyl and alkyl bound in aralkyl or alkaryl may also be cycloalkyl,
- P: represents a residue of a polymer P(AH)ₓ with a number-average molecular weight of at least 5000, with one or more OH or NH₂ groups, which polymer has been chosen from the group consisting of polyphenylene oxides, phenoxy resins, polyesters and polycarbonates with terminal OH groups and polymers containing one or more OH or NH₂ groups exclusively as a result of modification,
- (-L-): represents an opened lactam ring,
- (-L): represents a non-opened lactam ring
- x: is an integer higher than or equal to 1,
- y: is equal to 0 or 1.
Such compounds are referred to as N-substituted carbamoyl compounds.

It has also been found that the said compounds can be polymerized by lactam polymerization on the terminal lactam group to form polyamide block copolymers.

It has further been found that such block copolymers can very well be used as compatibilizers for mixtures of (co)polyamides with other polymers, particularly polymers of the grade which the polymer residue P has been derived from or polymers compatible with polymers of the grade which the residue P has been derived from.

Polymers that are to be mixed with each other need not be the same as the respective polymer blocks in the present block copolymers used as compatibilizer for that mixing process. Those polymers do have to be compatible with one of the polymer blocks. Polylactam corresponding with the polylactam block is sufficiently compatible with such substances as polyamide 6, polyamide 6,6, polyamide 4,6 and polyamide 6,11.

Polyphenylene oxide is compatible with all styrene-containing polymers with a low comonomer content, for instance high-impact polystyrene, polystyrene, SMA with low maleic anhydride content, SAN with low acrylonitrile content, etc.

Polyphenylene oxide is sufficiently compatible also with such substances as tetramethylbisphenol A-polycarbonate and polysulphone based on tetramethyldichlorophenyl sulphone, etc.

Moreover, a block copolymer according to the invention can be used with a polyphenylene oxide block for making such mixtures compatible in which polyphenylene oxide, high-impact polystyrene, polystyrene, SMA with low maleic anhydride content and SAN with low acrylonitrile content is one of the components.

A block copolymer according to the invention can be used also with a polyphenylene oxide block for making such mixtures compatible in which tetramethylbisphenol-A-polycarbonate and polysulphone based on tetramethyldichlorophenylsulphone, etc. is one of the components.

Polymer block P in the present block copolymers will generally be a homopolymer block. It will be clear that one of the polymer components to be mixed can mostly without any disadvantage be a copolymer or graft polymer containing monomer units of the polymer block P or be a polymer modified in a different way. For instance, impact-resistant polystyrene and polyamide can be mixed using a block copolymer according to the invention containing a block homopolystyrene.

It will be clear that the invention is not limited hereto and that the above exposition has been included only by way of example.

The compounds having the above-mentioned general formula can be prepared in a manner known per se by reacting a polymer with one or more OH or NH₂ groups, as defined above, at an elevated temperature of at least 80¤C, preferably between 90¤C and 250¤C, in the presence of a catalyst such as, for instance, an alkali metal lactamate, such as sodium or potassium lactamate, a Lewis acid, for instance magnesium stearate, magnesium chloride, zinc acetylacetonate, with a lactam-blocked diisocyanate. The chosen temperature must not be so high that decomposition products are formed. It is generally to be preferred not to choose temperatures higher than about 250¤C. Such a conversion is carried out in melted lactam, in a solvent or dispersant in which the polymer may be dissolved, partly dissolved or may not be dissolved, or in the mass, i.e. without solvent, dispersant or melted lactam. The catalyst/lactam-blocked diisocyanate molar ratios to be applied in the process may range from, for instance, 0.01 to 10, preferably 0.05 to 5. The molar ratio of lactam-blocked diisocyanate/OH or NH₂ groups of polymer P(AH)ₓ may range from 10 to 0.5, preferably from 5 to 1, this ratio being most preferably equal to 1.

In this connection lactam-blocked diisocyanate is understood to mean reaction products of a diisocyanate and a lactam, more particularly caprolactam. Lactam-blocked diisocyanates are obtained according to the reaction equation below: 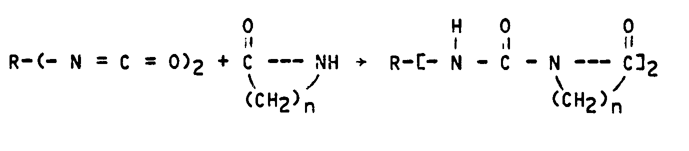
where R has the meanings defined above and n is an integer from 3-11 and is preferably 5.

A polymer which residue P in the above formula has been derived from can be represented by the general formula P(AH)ₓ where P, A and x have the meanings mentioned above. Such a polymer contains one or more (x ≧ 1) OH or NH₂ groups and has a number-average molecular weight of at least 5000, preferably between 10000 and 50000 and particularly between 20000 and 250000. Moreover, such a polymer must be chosen from the group mentioned above.

That group consists of:
a. polyphenylene oxides, these are polymers of substituted phenols. A summarized description of them is given in 'Encyclopedia of Polymer Science and Engineering', 1st impression, volume 10, pp. 92-110. Polymers of 2,6-dimethylphenol are produced on an industrial scale and are commercially available. The polyphenylene oxides referred to here are, however, not limited thereto. The polyphenylene oxides generally contain one or more phenolic hydroxyl groups. In so far as such a group should not be present, it can readily be introduced in a manner known in the art. If so desired, the polyphenylene oxides can be modified by converting the phenolic OH group in a manner known in the art into an aliphatic OH-group, for instance by conversion with an epoxy compound. Within the scope of the present invention polyphenylene oxides are understood to include modified polyphenylene oxides with aliphatic OH groups.
b. phenoxy resins, these are generally known amorphous polymers derived from diphenols and epichlorohydrin. A summary description of phenoxy resins is given in a general article by W.F. Hale in 'Encyclopedia of Polymer Science and Engineering', 1st impression, volume 10, pp. 111-122.
   Phenoxy resins are produced on an industrial scale and are commercially widely available. The OH groups in the phenoxy resins are mostly aliphatic. In so far as the OH groups should be wholly or partly aromatic, the phenoxy resin can be modified, if so desired, by converting aromatic OH groups into aliphatic OH groups, for instance by conversion with an epoxy compound.
   The expression 'phenoxy resin' as used herein comprises all polymers comprised by the above-mentioned general article, as well as modifications thereof as referred to above.
c. polyesters or polycarbonates with terminal OH groups.
   Polyesters are polycondensates known for long, which are mostly built up from at least one aromatic dicarboxylic acid with 8-14 carbon atoms and from at least one diol. The aromatic dicarboxylic acid may have been replaced wholly or partly by an aliphatic or cycloaliphatic dicarboxylic acid and the diol may have been replaced wholly or partly by a diphenol. Polycarbonates are polycondensates of one or more diols or diphenols and carbonic acid. Like the polyesters, the polycarbonates are generally known. Both are produced on a large scale and are commercially available in many grades. If the polycondensation is carried out with an excess of diol or diphenol, the polyester or the polycarbonate will contain terminal OH groups. The OH groups need not exclusively occur at the ends of the chains. When small amounts of trivalent or multivalent acids, alcohols or phenols are used in the polycondensation, shorter or longer side chains may be introduced on which an OH group may occur. Here again, any aromatic OH groups present can be converted, if so desired, in the manner known in the art, into aliphatic OH groups.
d. Polymers containing one or more OH or NH₂ groups exclusively as a result of modification, so-called OH- or NH₂-functionalized polymers.

Such polymers can be prepared by introducing into a polymer not containing any hydroxyl and amino groups one or more hydroxyl or amino groups and preferably one such group. Processes to achieve this are known from the state of the art. For instance, on a so-called living anionically polymerized polymer an epoxy compound or an aziridin compound can be made to act. Living polymer is understood to mean a polymer obtained by catalytic polymerization of a monomer without termination taking place. Examples hereof are the anionic polymerization of vinyl monomers, for instance styrene, isoprene, butadiene, acrylonitrile, alkyl acrylates, etc. with n-BuLi as initiator. The living anionic polymers obtained in the process can subsequently react with epoxy compounds or with aziridin compounds such as, for instance, ethylene oxide or aziridin, while forming (RO)-M⁺- or (RNH)-M⁺- terminal groups, where M⁺ represents a metal ion. After addition of a proton donor an OH- or NH₂-functionalized polymer is formed. It will be quite clear to the average person skilled in the art that living polymers are not limited to the above-mentioned enumeration. From the state of the art many other examples are known.

Hydroxyl groups can be introduced also by, for instance, photo-oxidation of, for instance, unsaturated rubbers. See E.F.J. Duynstee and M.E.A.H. Mevis, European Polymer Journal 8 (1972) 1375. Also can, for instance, vinyl monomers with minor amounts of a monomer containing a hydroxyl group, for instance hydroxyethylmethacrylate, be copolymerized. Polymerization can also be effected using a radical-initiator containing a hydroxyl group. See J.C. Brosse et al Adv. Pol. Sc. 81 (1986) 167. By copolymerization with, for instance, acrylamide a polymer functionalized with amine groups can be prepared.

Examples of polymers that can be modified with one or more OH or NH₂ groups are olefin polymers and copolymers, such as polyethylene, polypropylene, etc. elastomeric or non-elastomeric ethylene-propylene copolymers or ethylene-propylene-diene terpolymers, polydienes, such as polybutadiene, polyisoprene, polystyrene. It will be clear that these have been mentioned only by way of example and that there are many other possibilities that will readily be envisaged by the average person skilled in the art.

Suitable diisocyanates for use within the scope of the present invention are aliphatic diisocyanates, such as 1,5-hexanediisocyanate, 1,6-hexanediisocyanate, cycloaliphatic diisocyanates, such as isophoronediisocyanate, aromatic diisocyanates, such as toluenediisocyanate, etc. Preference is given to the use of 1,6-hexanediisocyanate.

The diisocyanate is reacted with lactam, preferably with caprolactam, to form a lactam-blocked diisocyanate by heating, at a temperature of 110¤C or higher, a mixture of lactam and diisocyanate so composed that the number of lactam groups in the mixture is the same as or larger than the number of isocyanate groups.

Subsequently, the lactam-blocked diisocyanate is reacted in the manner mentioned above with a polymer with OH or NH₂ groups as defined hereinbefore. In the process it has surprisingly been found that in converting two equivalents of lactam-blocked diisocyanate per equivalent of OH or NH2 of the polymer no demonstrable amounts of reaction products of the relevant polymer with the two lactam groups of the lactam-blocked diisocyanate are formed. Only reaction products with the above-mentioned formula can be demonstrated, in which one non-converted lactam-blocked isocyanate group is yet present. That product can then, in the presence of a lactam polymerization catalyst, be polymerized in melted lactam or in a suitable dispersant or in the mass to form a polyamide block copolymer with the general formula 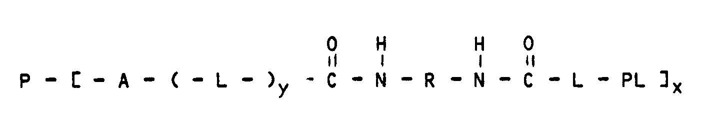
where the symbols A, R, P, - L - and y have the meanings defined hereinbefore and PL represents a polylactam block. If in the above-mentioned formula of the compounds according to the present invention x = 1, so-called two-block or AB-block copolymers are obtained having the general formula 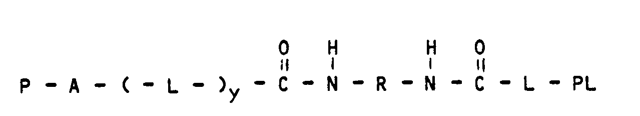
where the symbols A, R, P, - L -, PL and y have the meanings mentioned hereinbefore, which is highly desirable for a block copolymer to be used as compatibilizer. In the interface between two non-compatible polymers such AB-block copolymers will be so oriented that the A, respectively B block will stick in the polymer component compatible therewith, so that not only good stabilization, but also a strong bonding of the two components is obtained. If a diisocyanate with non-lactam-blocked isocyanate groups were to be started from, it would be difficult to prevent the two isocyanate groups of a part of the diisocyanate from reacting with the polymer with the OH or NH₂ groups. Such a reaction can be obstructed by using a large excess of diisocyanate for the reaction with the polymer containing the OH, respectively NH2 groups, but the disadvantage thereof is that after the conversion the excess of diisocyanate can be removed from the reaction mixture only with difficulty. According to the present invention, the block copolymers can be prepared more easily and more economically.

The lactam polymerization on an N-substituted carbamoyl-lactam compound having the formula mentioned hereinbefore is carried out in a manner know per se in the presence of a basic lactam polymerization catalyst. Such catalysts and such polymerizations are known in the art and are described, for instance, in EP-A-134,616, EP-A-135,233. Examples thereof include: sodium lactamate, potassium lactamate and lactam-magnesium bromide or lactam-magnesium chloride. A small amount of catalyst is already sufficient, for instance less than 1 mole % calculated on the lactam to be polymerized, but larger amounts to, for instance, 3 moles % can be used also.

The weight ratios between lactam monomer and N-substituted carbamoyllactam compound may vary widely and are generally between 5 : 95 and 95 : 5 and preferably between 30 : 70 and 70 : 30. As the amount of lactam monomer polymerized on the N-substituted carbamoyl-lactam compound increases, the molecular weight of the polylactam block will be higher.

The polylactam block must have a number-average molecular weight of at least 1000 and preferably it is at least 4000. In general the number molecular weight will be 50,000 at most.
Higher molecular weights are indeed possible, but do not produce any advantage. Customary modifications of the lactam polymerization to polyamide and in this case consequently to a polyamide block can be applied.

The chosen lactam for the formation of the polyamide block in the present block copolymers is preferably the same lactam as used for blocking the diisocyanate. More particularly caprolactam is used for both the blocking and the formation of the polyamide block.

In the preparation of the polymer mixture it may be essential for such preparation to be carried out in the presence of one or more compounds that are normally also used in polymers, such as fillers, plasticizers, flame retardants, stabilizers, impact modifiers and reinforcing fibres such as asbestos, glass fibres or carbon fibres.

The invention is further elucidated by the following examples without being limited by them.

### Example 1

ω-hydroxy polystyrene, which will hereinafter for the sake of brevity be referred to as PS-OH, was synthesized according to the method described by Heuschen et al in Macromolecules 14 (1981) 242-246. To this end styrene dissolved in toluene was subjected under vacuum to anionic polymerization at room temperature using sec. butyllithium as initiator. After about 16 hours' polymerization, a 20% solution of a fivefold excess of ethylene oxide in benzene was added dropwise to the polymer cooled down to 0¤C. The ethylene oxide was dried beforehand using CaH and n-BuLi. After further processing of the reaction product, OH-functionalized polystyrene (PS-OH) was obtained. Three samples of PS-OH were synthesized: PS-OH-1 with a number-average molecular weight of 45,000; PS-OH-2 with a number average molecular weight of 47,000 and PS-OH-3 with a number-average molecular weight of 50,000.

### Example 2

In a nitrogen atmosphere 10 g (2.1 x 10⁻⁴ moles) PS-OH-2 and 200 mg of a solution of 1,6-hexamethylenediisocyanatebiscaprolactam (HMDIBC) in caprolactam, which contained 4 x 10⁻⁴ moles HMDIBC, were dissolved in a mixture of 20 ml decalin (decahydronaphthalene) and 8 ml toluene while being stirred and heated. Toluene was distilled off. Subsequently, 100 mg (7.4 x 10⁻⁴ moles) NaH was added to the mixture, upon which heating took place at 120¤C. After stirring for 1 hour at 120¤C the reaction product of PS-OH-2 and HMDIBC, which is referred to as PS-HMDIBC-1, was coagulated by pouring it out into methanol. The coagulated PS-HMDIBC-1 was filtered off and dried under vacuum at 50¤C.
Caprolactam and an excess of HMDIBC remained in the methanol phase. In a GPC analysis of the PS-HMDIBC no coupling of two PS-OH molecules to one binfunctional HMDIBC molecule could be demonstrated.

### Example 3

In a nitrogen atmosphere 9 g (1.9 x 10⁻⁴ moles) of the PS-HMDIBC of example 2, 4.8 g (4.2 x 10⁻² moles) dry caprolactam and 2.8 mg (1.2 x 10⁻⁴ moles) NaH were stirred for 2 hours at 200¤C. After cooling, the solid reaction product was ground and subsequently extracted at room temperature for 16 hours using methanol for removing unconverted caprolactam. Subsequently, using toluene, extraction was carried out to remove styrene homopolymer and unconverted PS-HMDIBC-1. Finally, using trifluoroethanol, extraction took place for removing polycaprolactam. The total yield of block copolymer was 77% calculated on PS-HMDIBC-1 and caprolactam. The block copolymer consisted for 81% (mass) of polystyrene and for 19% (mass) of polycaprolactam. (M_{polystyrene block} = 47,000 and M_{polycaprolactam block} = 11,000).

### Example 4

In a nitrogen atmosphere 10 g (2.1 x 10⁻⁴ moles) PS-OH-2 and 100 mg of a solution of HMDIBC in caprolactam, which contained 2 x 10⁻⁴ moles HMDIBC, were dissolved in 40 ml m-xylene. The mixture was dried by distilling off 10 ml m-xylene, in wich process traces of water were distilled off by azeotropic distillation. After addition of 4.8 mg (2 x 10⁻⁴ moles) NaH and 1 g (8.8 x 10⁻³ moles) caprolactam, the mixture was heated at 105¤C. In the process sodium lactamate was formed in situ. After stirring for one hour at 105¤C, the mixture, which contained the reaction product of PS-OH-2 and HMDIBC, was poured out into hexane. The hexane-insuloble residue was filtered off, washed with methanol and dried under vacuum at 50¤C. A GPC analysis showed that only coupling of one PS-OH molecules to one HMDIBC molecule had taken place. No coupling of two PS-OH molecules to one bifunctional HMDIBC molecule could be demonstrated.

### Example 5

In a nitrogen atmosphere 9.8 g (2.1 x 10⁻⁴ moles) PS-HMDIBC-2, that is the coupling product of PS-OH-2 and HMDIBC obtained according to example 4, 2 g (1.8 x 10⁻² moles) dry caprolactam and 4.8 mg (2 x 10⁻⁴ moles) NaH were stirred for 2 hours at 200¤C. After cooling, the solid reaction product was ground and subsequently extracted at room temperature for 16 hours, using methanol, then extracted with toluene and finally extracted with trifluoroethanol for the removal of unconverted caprolactam, styrene homopolymer, unconverted PS-HMDIBC-2 and finally polycaprolactam.

The total yield of block copolymer, calculated on PS-HMDIBC-2 and caprolactam, was 75%. The block copolymer consisted for 93% (mass) of polystyrene and for 7% (mass) of polycaprolactam. (M_{polystyrene block} = 47,000; M_{polycaprolactam block} = 3,500).

### Example 6

In a nitrogen atmosphere 10 g (2.1 x 10⁻⁴ moles) PS-OH-2, 4 g (3.5 x 10⁻² moles) dry caprolactam and 100 mg of a solution of HMDIBC in caprolactam, which contained 2 x 10⁻⁴ moles HMDIBC, were dissolved during stirring in 30 ml dry benzene. To the homogeneous mixture 4.8 mg (2 x 10⁻⁴ moles) NaH was subsequently added. The solution of the reaction mixture in benzene was refluxed for one hour, in which process coupling of PS-OH-2 to HMDIBC took place. Subsequently, the benzene was distilled off. Immediately afterwards 4.8 mg (2 x 10⁻⁴ moles) NaH was yet added to the reaction mixture, upon which the whole of it was heated during stirring for two hours at 200¤C. After cooling, the solid reaction product was ground fine and subsequently extracted in the same way as in examples 3-5.

The yield of block copolymer was 54%. This block copolymer consisted for 77% (mass) of polystyrene and for 23% (mass) of polycaprolactam (M_{polystyrene block} = 47,000; M_{polycaprolactam block} = 14,000).

### Example 7

In a nitrogen atmosphere 10 g (2.2 x 10⁻⁴ moles) PS-OH-1 and 100 mg of a solution of HMDIBC in caprolactam, which contained 2 x 10⁻⁴ moles HMDIBC, were dissolved during stirring in 40 ml dry toluene. After distilling off about 10 ml toluene, in which process possible traces of water were distilled off also by azeotropic distillation, 5 mg (2.1 x 10⁻⁴ moles) NaH was added. The solution of the reaction mixture in toluene was refluxed for 4 hours during stirring. A sample drawn from the solution was subjected to a GPC analysis. No coupling of two PS-OH-1 molecules to one HMDIBC molecule could be demonstrated.

Subsequently, to the reaction mixture 5.5 g (4.9 x 10⁻² moles) dry caprolactam and 5 mg (2.1 x 10⁻⁴ moles) NaH were added. During stirring heating took place for 16 hours at 115¤C, in which process caprolactam polymerized on the caprolactam residue of the product of the coupling of PS-OH-1 and HMDIBC. After cooling, the reaction product was coagulated in methanol, the suspension was filtered and the solid product was ground fine and subsequently extracted in the manner described in the preceding examples using methanol, toluene and trifluoroethanol. The yield of block copolymer, calculated on PS-OH-1 and caprolactam, was 55%. This block copolymer consisted for 69% (mass) of polystyrene and for 31% (mass) of polycaprolactam (M_{polystyrene block} = 45,000 and M_{polycaprolactam block} = 20,000).

### Example 8

In a nitrogen atmosphere 10 g (2.2 x 10⁻⁴ moles) PS-OH-1, 5.5 g (4.9 x 10⁻² moles) caprolactam and 132 mg of a solution of HMDIBC in caprolactam, which contained 2.6 x 10⁻⁴ moles HMDIBC, were dissolved during stirring in 40 ml dry toluene. Traces of water were distilled off by azeotropic distillation by distilling from this mixture 10 ml toluene. Subsequently, 15.8 mg (6.6 x 10⁻⁴ moles) NaH was added and the mixture was refluxed for 4 hours while being stirred. After PS-OH-1 had thus been converted with HMDIBC, another quantity of 5 mg (2.1 x 10⁻⁴ moles) NaH was added and the mixture was heated for 6 hours at 115¤C while being stirred. After the reaction mixture had cooled down, it was coagulated in methanol, upon which the suspension obtained in the process was filtered off. The solid product filtered off was ground fine and extracted as described in the preceding examples.

The yield of block copolymer was 72%, calculated on PS-OH-1 and caprolactam. The block copolymer consisted for 70% (mass) of polystyrene and for 30% (mass) of polycaprolactam (M_{polystyrene block} = 45,000; M_{polycaprolactam block} = 19,000).

### Example 9

In a nitrogen atmosphere 10 g (2 x 10⁻⁴ moles) PS-OH-3, 5 g (4.4 x 10⁻² moles) caprolactam and 120 mg of a solution of HMDIBC in caprolactam, which contained 2.4 x 10⁻⁴ moles HMDIBC, were dissolved in 40 ml dry toluene. Subsequently, 10 ml toluene was distilled off, in which process any traces of water were distilled off simultaneously by azeotropic distillation. Then 15.8 mg (6.6 x 10⁻⁴ moles) NaH was added and the mixture was refluxed for 4 hours while being stirred. Subsequently, 15.8 mg (6.6 x 10⁻⁴ moles) NaH was added once again and during stirring refluxing took place for 6 more hours. After cooling of the reaction mixture, coagulation took place using methanol. The suspension formed was filtered off and the solid product was ground fine and extracted in the manner described in the preceding examples.

The yield of block copolymer calculated on PS-OH-3 and caprolactam was 62%. The block copolymer consisted for 79% (mass) of polystyrene and for 21% (mass) of polycaprolactam (M_{polystyrene block} = 50,000 and M_{polycaprolactam block} = 13,000).

### Example 10

In a nitrogen atmosphere 10 g (2 x 10⁻⁴ moles) PS-OH-3, 5 g (4.4 x 10⁻² moles) caprolactam and 200 mg of a solution of HMDIBC in caprolactam, which contained 4 x 10⁻⁴ moles HMDIBC, were dissolved in 40 ml dry toluene. Subsequently, 10 ml toluene was distilled off, in which process any traces of water were distilled off simultaneously by azeotropic distillation. Then 14.4 mg (6 x 10⁻⁴ moles) NaH was added and during stirring refluxing took place for 4 hours. Subsequently, 14.4 mg (6 x 10⁻⁴ moles) NaH was added once again and during stirring refluxing took place for 18 hours. The reaction mixture was coagulated by pouring it out into methanol, upon which the precipitate formed was filtered off, ground fine and extracted in the manner described in the preceding examples.

The yield of block copolymer was 75%, calculated on PS-OH-3 and caprolactam. The block copolymer consisted for 68% (mass) of polystyrene and for 32% (mass) of polycaprolactam (M_{polystyrene block} = 50,000; M_{polycaprolactam block} = 23,500).

### Example 11

In a nitrogen atmosphere 6.2 g (3 x 10⁻⁴ moles) poly(2,6-dimethyl)-1,4-phenylene oxide (PPO) and 800 mg of a solution of HMDIBC in caprolactam, which contained 1.6 x 10⁻³ moles HMDIBC, were dissolved in 60 ml dry toluene. Subsequently, 10 ml toluene was distilled off, in which process any traces of water were distilled off simultaneously by azeotropic distillation. Then 20 mg (8.3 x 10⁻⁴ moles) NaH was added and during stirring refluxing took place for 6 hours. After cooling, the reaction mixture was diluted with 100 ml toluene. The turbid mixture was filtered off and the clear filtrate was coagulated by pouring it out into methanol. The precipitate was filtered off, washed with methanol and dried under vacuum at 50¤C.

The infrared spectrum of the product thus obtained showed a carbonyl absorption not present in the spectrum of the PPO that was started from. It showed that the PPO had reacted with the HMDIBC.

### Example 12

In a nitrogen atmosphere 5.0 g (2.5 x 10⁻⁴ moles) of the reaction product prepared according to example 11 from PPO and HMDIBC and 4.0 g (3.5 x 10⁻² moles) caprolactam were dissolved in 20 ml dry toluene. The toluene was subsequently distilled off, in which process any traces of water were distilled off simultaneously by azeotropic distillation. Then, 25 ml dry decalin (decahydronaphthalene) and 10 mg (4.2 x 10⁻⁴ moles) NaH were added to the evaporation residue. Subsequently the mixture was stirred for 5 hours in a nitrogen atmosphere at 160¤C. After cooling to room temperature, the solid product was separated off and stirreed for 2 hours in 200 ml chloroform. The suspension formed was coagulated in methanol, the precipitate was filtered off and subsequently extracted in the manner described in the preceding examples.

The yield of block copolymer was 5.5 g, that is 61% calculated on PPO-HMDIBC coupling product and caprolactam. The block copolymer consisted for 73% (mass) of PPO and for 27% (mass) of polycaprolactam.

### Example 13

On a two-roll mill the block copolymer of 81% (mass) polystyrene block and 19% (mass) polycaprolactam block prepared according to example 3 was mixed at 230¤C with a fivefold amount of impact resistant polystyrene marketed by Montefina under the brand name of 615 PO. Subsequently, the same amount (calculated on the polystyrene) of Ultramid B4, a polycaprolactam marketed by BASF, was brought onto the rolls and kneading took place for 3-5 minutes more. Of the 1 : 1 polystyrene and polycaprolactam mixture thus prepared, containing 10% (wt) compatibilizer (block copolymer according to example 3) calculated on the mixture, test bars were made by moulding in a mould for 3 minutes at 240¤C. From the test bars test specimens with a thickness of 5 m were cut.

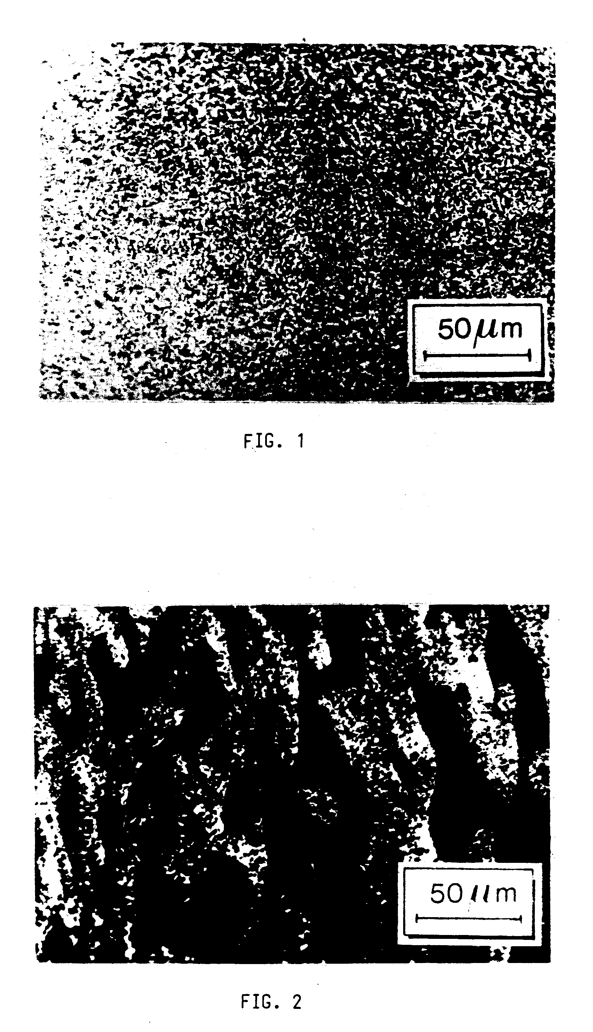

Fig. 1 is a microscope photo of such a specimen enlarged 500x.

For comparison the above-mentioned procedure was repeated without addition of a compatibilizer.

Fig. 2 is a microscope photo of a specimen from the comparative mixture enlarged 500x. According to the invention a much finer dispersion is obtained.

### Example 14

Of the mixture according to example 13 and of the comparative mixture, which did not contain any block copolymer according to example 3, standard bars were made for tensile testing purposes. Of both of them the yield stress and the tensile strength were measured. The yield stress and the tensile strength of the comparative specimen were 27.9, respectively 30.6 N/mm2. Of the specimen with compatibilizer they were significantly higher, viz. 36.0, respectively 37.7 N/mm².

### Example 15

On a twin-screw extruder 500 g Stanyl^{R} TW 300 (= Nylon 4.6, DSM), 500 g poly)2,6-dimethyl)-1,4-phenylene oxide (PPO) and 20 g PS-b-Nylon 6 (M_{polystyrene block} = 50,000 and M_{polycaprolactam block} = 21,000) were intimately mixed at a temperature of 310¤C. Of the blend test bars were injection-moulded. The cryo-fracture surface of these test bars showed dispersed particles with a diameter of 1-7 µm. For the purpose of comparison the above process was repeated without adding compatibilizer. The cryo-fracture surfaces of the test bars of this blend usually showed round, non-deformed dispersed particles with a diameter of 2-15 µm. For this PPO/Nylon 4.6 blend, too, a finer dispersion is obtained according to the invention.

## Claims

1. Conversion products of lactam-blocked diisocyanates and functionalised polymers P(AH)ₓ, characterized by the general formula: 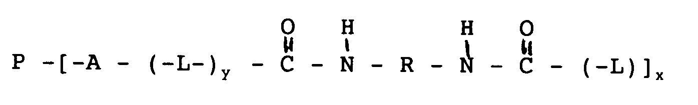 where
A represents an oxygen atom or an -NH-group,
R represents an alkyl, aralkyl, alkaryl or aryl group, where alkyl and alkyl bound in aralkyl or alkaryl may also be cycloalkyl,
P represents a residue of a polymer P(AH)ₓ with a number-average molecular weight of at least 5000 with one or more OH or NH₂ groups, which polymer has been chosen from the group consisting of polyphenylene oxides, phenoxy resins, polyesters and polycarbonates with terminal OH groups, olefin polymers and copolymers, elastomeric or non-elastomeric ethylene-propylene copolymers or ethylene-propylene-diene terpolymers, polydienens, polyisoprene and/or polystyrene containing one or more OH or NH₂ groups exclusively as a result of modification,
(-L-) represents an opened lactam ring,
(-L) represents an unopened lactam ring,
x is an integer higher than or equal to 1,
y is equal to 0 or 1.

2. Polyamide block copolymers consisting of one or more polyamide blocks and another polymer block, characterized by the general formula: 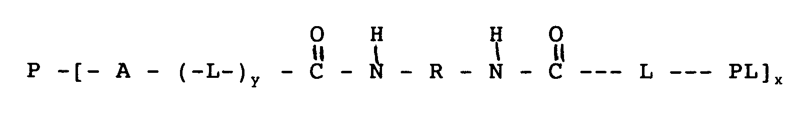 where the symbols A, R, P, -L-, x and y have the meanings defined in claim 1 and PL represents a polylactam block.

3. Polyamide block copolymers according to claim 2, characterized by the general formula: 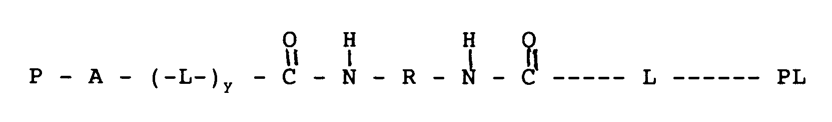 where the symbols A, R, P, L, PL and y have the meanings defined in claims 1 and 2.

4. The use of block copolymers according to claim 2 or 3 as compatibilizers for mixtures of a polyamide with another polymer.

5. Mixture of a polystyrene and a polyamide, characterized in that it contains 15% (wt) at most of a polyamide block copolymer according to claim 2 or 3, while P in the formulas mentioned hereinbefore represents a polystyrene residue.

6. Mixture of a polyphenylene oxide or a phenoxy resin and a polyamide, characterized in that it contains 15% (wt) at most of a polyamide block copolymer according to claim 2 or 3.

7. Mixture according to claim 6, characterized in that it contains 15% (wt) at most of a polyamide block copolymer according to claim 2 or 3, while P represents in the formulas mentioned hereinbefore a polyphenylene oxide residue or a phenoxy resin residue.

## Patentansprüche

1. Umsetzungsprodukte aus lactamgeblockten Diisocyanaten und funktionalisierten Polymeren P(AH)ₓ, gekennzeichnet durch die allgemeine Formel: 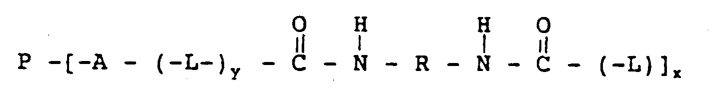 in der
A ein Sauerstoffatom oder eine -NH-Gruppe darstellt,
R eine Alkyl-, Aralkyl-, Alkaryl- oder Aryl-Gruppe darstellt, wo das Alkyl und das im Aralkyl oder Alkaryl gebundene Alkyl auch ein Cycloalkyl sein kann,
P einen Rest eines Polymers P(AH)ₓ mit einem Zahlenmittel des Molekulargewichts von mindestens 5000 mit einer oder mehreren OH- oder NH₂-Gruppe(n) darstellt, welches Polymer ausgewählt worden ist aus der Gruppe bestehend aus Polyphenylenoxiden, Phenoxyharzen, Polyestern und Polycarbonaten mit endständigen OH-Gruppen, Olefinpolymeren und -Copolymeren, elastomeren oder nicht-elastomeren Ethylen-Propylen-Copolymeren oder Ethylen-Propylen-Dien-Terpolymeren, Polydienen, Polyisopren und/oder Polystyrol mit einer oder mehreren OH- oder NH₂-Gruppe(n), ausschließlich als ein Ergebnis einer Modifikation,
(- L -) einen geöffneten Lactamring darstellt,
(- L) einen nicht-geöffneten Lactamring darstellt,
x eine ganze Zahl größer als oder gleich 1 ist,
y gleich 0 oder 1 ist.

2. Polyamidblockcopolymere bestehend aus einem oder mehreren Polyamidblöcken und einem weiteren Polymerblock, gekennzeichnet durch die allgemeine Formel: 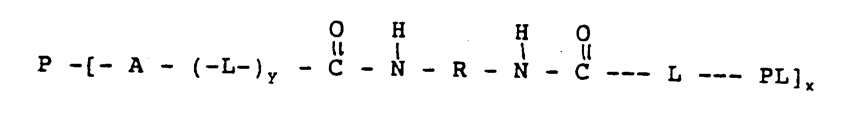 in der die Symbole A, R, P, - L -, x und y die in Anspruch 1 definierten Bedeutungen besitzen, und PL einen Polylactamblock darstellt.

3. Polyamidblockcopolymere nach Anspruch 2, gekennzeichnet durch die allgemeine Formel: 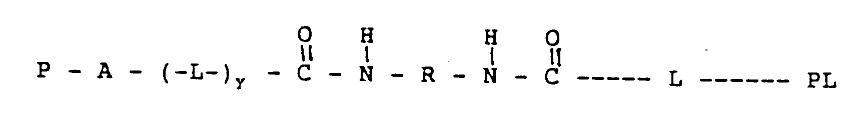 in der die Symbole A, R, P, L, PL und y die in den Ansprüchen 1 und 2 definierten Bedeutungen besitzen.

4. Verwendung von Blockcopolymeren nach Anspruch 2 oder 3 als Kompatibilisatoren für Gemische aus einem Polyamid mit einem anderen Polymer.

5. Gemisch aus einem Polystyrol und einem Polyamid, dadurch gekennzeichnet, daß es höchstens 15 Gew.-% eines Polyamidblockcopolymers nach Anspruch 2 oder 3 enthält, während P in den vorstehend erwähnten Formeln einen Polystyrol-Rest darstellt.

6. Gemisch aus einem Polyphenylenoxid oder einem Phenoxyharz und einem Polyamid, dadurch gekennzeichnet, daß es höchstens 15 Gew-% eines Polyamidblockcopolymers gemäß Anspruch 2 oder 3 enthält.

7. Gemisch nach Anspruch 6, dadurch gekennzeichnet, daß es höchstens 15 Gew.-% eines Polyamidblockcopolymers nach Anspruch 2 oder 3 enthält, während P in den vorstehend erwähnten Formeln einen Polyphenylenoxid-Rest oder einen Phenoxyharz-Rest darstellt.

## Revendications

1. Produits de conversion de diisocyanates bloqués par des lactames et des polymères fonctionnalisés P(AH)ₓ, caractérisés en ce qu'ils répondent à formule générale : 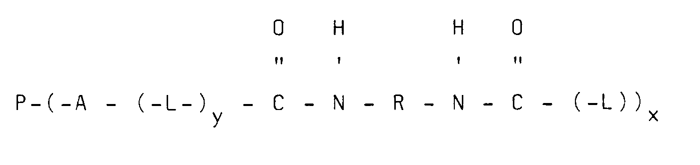 dans laquelle :
A est un atome d'oxygène ou un groupe -NH,
R représente un radical alkyle, aralkyle, alcaryle ou aryle dans lequel l'alkyle et l'alkyle bloqué dans l'aralkyle ou dans l'alcaryle peut aussi être le cycloalkyle,
P représente un reste d'un polymère P(AH)ₓ ayant une masse moléculaire moyenne en nombre d'au moins 5000 avec un ou plusieurs groupe(s) OH ou NH₂, polymère qui a été choisi parmi les oxydes de polyphénylène, les résines phénoxy, les polyesters et les polycarbonates ayant des groupes terminaux OH , les polymères et copolymères oléfiniques, les copolymères éthylène/propylène élastomères ou non élastomères ou polymères ternaires éthylène/propylène/diène, les polydiènes, le polyisoprène et/ou le polystyrène contenant un ou plusieurs groupe(s) OH ou NH₂ exclusivement à la suite de la modification,
(-L-) représente un noyau lactame ouvert,
(-L) représente un noyau lactame non ouvert,
x est un nombre entier égal ou supérieur à 1,
y est égal à 0 ou 1.

2. Copolymères séquencés de polyamides consistant en une ou plusieurs séquence(s) polyamide(s) et une autre séquence polymère, caractérisés en ce qu'ils répondent à la formule générale : 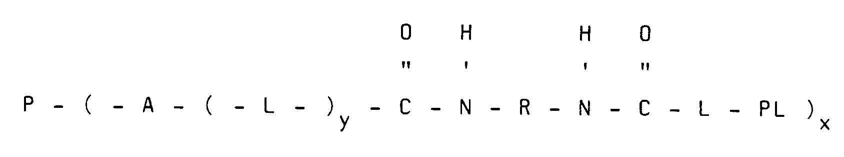 dans laquelle les symboles A, R, P, -L-, x et y ont les significations indiquées dans la revendication 1 et PL représente une séquence poly-lactame.

3. Copolymères séquencés de polyamides selon la revendication 2, caractérisés en ce qu'ils répondent à la formule générale : 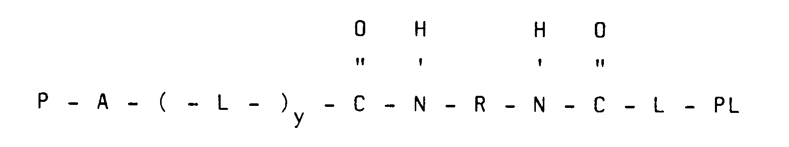 dans laquelle les symboles A, R, P, L, PL et y ont les mêmes significations que dans les revendications 1 et 2.

4. Utilisation de copolymères séquencés selon la revendication 2 ou 3, en qualité d'agent de compatibilité pour des mélanges d'un polyamide avec un autre polymère.

5. Mélange d'un polystyrène et d'un polyamide, caractérisé en ce qu'il contient au maximum 15% en poids d'un copolymère séquencé de polyamide selon la revendication 2 ou 3, tandis que P dans les formules mentionnées plus haut représente un reste de polystyrène.

6. Mélange d'un oxyde de polyphénylène ou d'une résine phénoxy et d'un polyamide, caractérisé en ce qu'il contient au maximum 15% en poids d'un copolymère séquencé de polyamide selon la revendication 2 ou 3.

7. Mélange selon la revendication 6, caractérisé en ce qu'il contient au maximum 15% en poids d'un copolymère séquencé de polyamide selon la revendication 2 ou 3, tandis que P représente dans les formules ci-dessus un reste d'oxyde de polyphénylène ou un reste de résine phénoxy.
